# EUROPEAN PATENT APPLICATION

(11) **EP 1 584 443 A1**
(43) Date of publication of application: **12.10.2005**
(21) Application number: 05007655.3
(22) Date of filing: 07.04.2005
(51) Int. Cl.: B29C 45/27

(54) **Nozzle having a nozzle body with heated and unheated nozzle body segments**

(30) Priority: 07.04.2004 US 559977 P; 21.07.2004 CA 2475500; 18.10.2004 US 618996 P
(71) Applicant: MOLD-MASTERS LIMITED, Ontario L7G 4X5 (CA)
(72) Inventor: Fischer, Jonathon, Oakville ON L6J 3Z8 (CA); Fairy, Fabrice, Georgetown, ON, L7G 5L5 (CA); Tabassi, Payman, Rockwood, ON, NOB 2KO (CA); Colonico, Gino, Georgetown, ON, L7G 1R1 (CA)
(74) Representative: Grünecker, Kinkeldey, Stockmair & Schwanhäusser Anwaltssozietät

(57) **Abstract**

A nozzle for an injection molding apparatus (10) includes a nozzle body (23) having a first nozzle body segment (26), a second nozzle body segment (27) and a third nozzle body segment (29). The second nozzle body segment (27) is removably connected to at least one of the first nozzle body segment (26) and the third nozzle body segment (29). The first nozzle body segment (26) and the third nozzle body segment (29) are heated either by first and second nozzle heaters (60,64), respectively, or by a heater sleeve (1033) having a cut-out (1035) along the length of the second nozzle body segment. The second nozzle body segment (27) is substantially devoid of a nozzle heater such that the second nozzle body segment is heated passively through contact with the first nozzle body segment (26) and the third nozzle body segment (29).

## Description

### Field of the Invention

The present invention relates generally to an injection molding apparatus including a manifold and an injection nozzle having a nozzle body. The invention also relates to a nozzle for use in such an apparatus.

### Background of the Invention

As is well known in the art, hot runner injection molding systems include a manifold for conveying pressurized melt from an inlet to one or more manifold outlets. A plurality of nozzles are typically coupled to the manifold outlets for conveying the melt to a plurality of mold cavities.

In some applications, such as molding of large automotive parts, it is necessary to use nozzles having different lengths, where the nozzles communicate with a single manifold. For example, when one is injecting a molten material into a mold cavity having an uneven surface facing the injection nozzles, then one of the nozzles has to be longer than the other to reach the mold cavity. In another example, when one is injecting a molten material simultaneously into separate mold cavities located in the same mold and having different heights or depths with respect to the tip portions of the nozzles, nozzles of different lengths are required. Such molds, often referred to as family molds, provide means to mold articles of different shapes at the same time using the same or different resins or metals.

To maintain the temperature of the melt as it travels through the melt channel of the nozzle, one can use either a single heater or multiple heaters. In either case, in many instances, there is more heat lost at the ends of the nozzle adjacent the manifold and mold gate than in the mid-section. The mid-section of the nozzle does not contact any part of the manifold or mold plate and, therefore, does not lose heat as quickly as at the ends. In long nozzles that are heated by a single heater, the mid-section retains heat more efficiently than the end portions. As a result, the temperature of the nozzle mid-section is often difficult to regulate if a single heater is used along the nozzle or melt channel. Thus, the temperature of the melt along the mid-section of the nozzle is higher than at the ends. This uneven heat profile is difficult to correct or control.

The uneven heat profile along the melt channel is undesirable because any variation in the temperature of the melt as it flows through the injection molding apparatus can adversely affect the quality of the molded products. The uneven heat distribution along the nozzle and melt channel is often exaggerated when longer nozzles, including nozzles having a nozzle body comprised of two nozzle body segments, are used.

In order to compensate for the uneven heat distribution along the length of the nozzle, a conventional nozzle heater is used. The nozzle heater includes a heating element that is wound around the nozzle body. The pitch of the heating element is typically smaller near the nozzle head and nozzle tip and larger along the nozzle mid-section in order to compensate for the uneven heat loss experienced by the nozzle. Also known are modular heaters made of several heater segments of different length having a larger pitch along the heater mid-section than at the end-sections, e.g. from German Patents Nos. DE 4 005 437 C2 and DE 4 404 894 C1. The modular segmented heater surrounds a nozzle body formed by a support tube that defines a nozzle melt channel. A disadvantage of this arrangement is still an uneven temperature profile along the nozzle body.

There is a need to provide a way to mold parts having uneven surfaces or to simultaneously mold various parts having different shapes in a single mold by using injection nozzles of variable length. There is also a need to better control and correct the heat profile along variable length nozzles. There is also a need to manufacture injection nozzles in various lengths in a faster and more efficient manner, while still being able to easily customize the length of the nozzle, or to manufacture and assemble the injection nozzles in different remote locations.

### SUMMARY OF THE INVENTION

The present invention provides an injection molding apparatus including a manifold and an injection nozzle having a nozzle body forming a melt channel. The nozzle body is multi-segmented and one of said nozzle body segments is substantially heated passively through contact with at least one adjacent nozzle body segment that is heated actively. Contrary to German Patents Nos. DE 4 005 437 C2 and DE 4 404 894 C1, the present invention provides for a segmented nozzle body which directly forms the melt channel. This enhances the heat profile of the nozzle to an additional extent Although a nozzle having two sprue bushes which are detachably connected to each other by a threaded connection is known from US Patent No. 5,225,211, the purpose of this known design is the variability of the construction due to the easy disassembly of the front sprue bush. Each sprue bush is actively heated by an independent heater. In addition, an injection nozzle having a number of transverse structural components which are connected by a sealing ring and clamping plate arrangement is kown from US Patent No. 6,712,597. However the nozzle comprises at least four heating zones and each heating zone is independently heated by two parallel heating elements. Both US Patents do not teach to construct nozzles of variable length or to enhance the heat profile along the length of the nozzle.

The passively heated nozzle body segment might be interlocked or connected (leak proof) to another nozzle body segment by a threaded engagement, brazing, welding, fusing, a press fit engagement or an interference fit engagement. In one embodiment, the second nozzle body segment can be removably attached to the other two nozzle body segments, so that second nozzle body segments of varying lengths can be used depending on the particular part to be molded. The second nozzle body segment can be made of a thermally conductive material. Depending on each particular application, the material of the second nozzle body segment can have either a higher, an equal or a slightly lower thermal conductivity than the material of the other two nozzle body segments. Further, the second nozzle body segment can be covered at least partially by a thermally conductive layer, such as a coating or by a sleeve. The coating or sleeve can be made of a material having a higher thermal conductivity than the material of the second nozzle body segment, such as brass, copper or copper alloy to improve or enhance the passive heat transfer along the second nozzle body segment. An insulating layer, such as a ceramic coating, can be used over the thermally conductive layer. In another embodiment, the second nozzle body segment incorporates rods or any other embedded or partially embedded structural elements made of materials having a higher thermal conductivity than of the nozzle body segment itself.

### BRIEF DESCRIPTION OF THE FIGURES

Embodiments of the present invention will now be described more fully with reference to the accompanying drawings in which like reference numerals indicate similar structure.

Figure 1 is a side view partly in section of an injection molding apparatus having nozzles of various lengths with either a unitary nozzle body or a nozzle body made of multiple nozzle body segments.

Figure 2 is a side view partly in section of another embodiment of an injection molding apparatus of the present invention having a nozzle with a nozzle body made of multiple nozzle body segments.

Figure 3 is a side view partly in section of yet another embodiment of an injection molding apparatus of the present invention having a nozzle with a nozzle body made of multiple nozzle body segments.

Figure 4 is a side sectional view of a portion of another embodiment of a nozzle having a nozzle body made of multiple nozzle body segments.

Figure 5 is a side sectional view of a portion of yet another embodiment of a nozzle having a nozzle body made of multiple nozzle body segments.

Figures 5A and 5B show enlarged views of portions A and B of Figure 5.

Figure 6 is a side sectional view of a portion of another embodiment of a nozzle having a nozzle body made of multiple nozzle body segments.

Figure 7 is a side sectional view of a portion of another embodiment of a nozzle having a nozzle body made of multiple nozzle body segments.

Figure 8 is a side view partly in section of another embodiment of an injection molding apparatus of the present invention having a nozzle with a nozzle body made of multiple nozzle body segments.

Figure 9 is a side view partly in section of another embodiment of an injection molding apparatus of the present invention having four nozzles of varying length.

Figure 10 is a side view partly in section of another embodiment of an injection molding apparatus of the present invention having two nozzles, each having a nozzle body made of multiple nozzle body segments, and a heater sleeve surrounding the nozzle body.

Figure 11 is a side sectional view of another embodiment of a nozzle having a nozzle body made of multiple nozzle body segments.

Figure 12 is a side sectional view of a portion of the nozzle shown in Figure 11.

Figure 13 is a side sectional view of another embodiment of a nozzle having a nozzle body made of multiple nozzle body segments.

Figure 14 is a side sectional view of another embodiment of a nozzle having a nozzle body made of multiple nozzle body segments.

Figure 15 is a side sectional view of a portion of another embodiment of a nozzle having a nozzle body made of multiple nozzle body segments.

Figure 16 is a side sectional view of another embodiment of a nozzle having a nozzle body made of multiple nozzle body segments.

Figure 17 is a side sectional view of a portion of the nozzle shown in Figure 16.

Figure 18 is a side sectional view of a portion of another embodiment of a nozzle having a nozzle body made of multiple nozzle body segments.

### DETAILED DESCRIPTION OF THE INVENTION

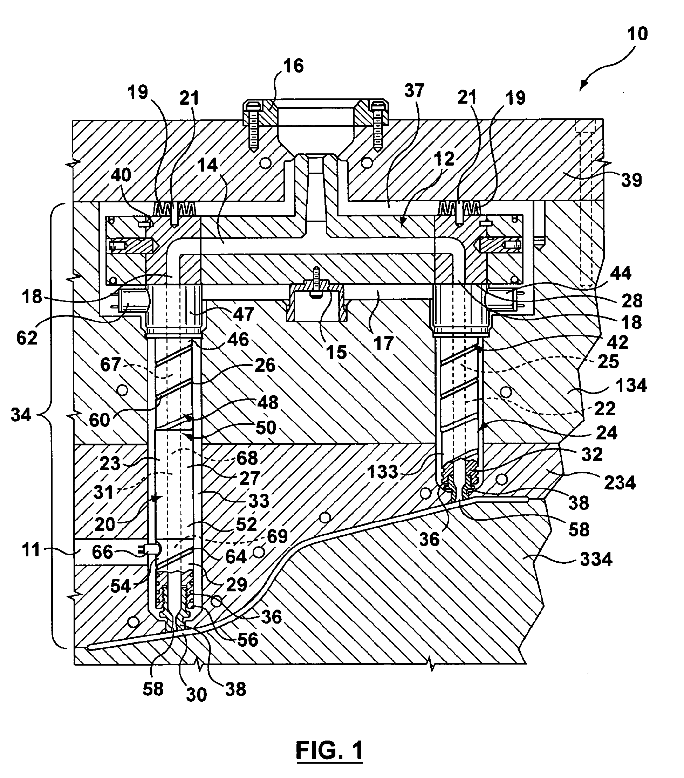

Referring now to Figure 1, an injection molding apparatus 10 is generally shown. The injection molding apparatus 10 includes a manifold 12 having a manifold channel 14 extending therethrough. A manifold bushing 16 is located at an inlet of the manifold channel 14 to receive a melt stream of moldable material from a machine nozzle (not shown) and to deliver the melt stream to manifold outlets 18. A heating element (not shown) heats manifold 12 to maintain the melt stream passing through manifold channel 14 at a desired temperature. The heating element of the manifold may be embedded into or otherwise surround a surface of the manifold 12. The manifold 12 is secured in position by a central locating ring 15 which bridges an insulative air space 17 between the heated manifold 12 and a cooled mold plate 134. Another insulative air space 37 of a predetermined width is located between the heated manifold 12 and a cooled clamp plate 39. Pressure discs 19 are mounted by screws 21 to create the insulative air space 37. Each pressure disc 19 can be made of a suitable high strength tool steel such as H 13 or 420 Stainless and has a central opening therethrough to receive the screw 21. One example of such a pressure disc is shown in U.S. Patent No. 5,125,827, which is incorporated herein by reference in its entirety. Other pressure discs or biasing elements could be used as would be apparent to one skilled in the relevant art.

Figure 1 shows a first nozzle 20 and a second nozzle 24, each nozzle 20, 24 is located in an opening 33 formed in mold plates 134 and 234 of a split mold plate 34. The nozzles 20 and 24 are positioned between the manifold 12 and a respective mold cavity 30, which is defined by mold plates 234 and 334 of split mold plate 34. Nozzle 24 includes a single nozzle body 22 having an upstream nozzle end 28 and a downstream nozzle end 32. A nozzle channel 25 extends through nozzle 24 for delivering the melt stream from one manifold outlet 18 to the corresponding mold cavity 30 through a mold gate 58. Nozzle 24 is further provided with a single heater 42, which helps to maintain the melt stream at a desired temperature as it passes through nozzle 24. Heater 42 is powered through an electrical connector 44 that is in communication with a power source (not shown) external to injection molding apparatus 10. Nozzle 24 also includes a nozzle tip 38 that is retained in the downstream end 32 of nozzle 24 via a threaded connection 36 with nozzle body 22.

Nozzle 20 includes a nozzle body 23 made of three nozzle body segments: an upstream (first) nozzle body segment 26, an intermediate (second) nozzle body segment 27 and a downstream (third) nozzle body segment 29, for delivering a melt stream from a manifold outlet 18 to mold cavity 30. Intermediate nozzle body segment 27 is disposed between the upstream nozzle body segment 26 and the downstream nozzle body segment 29 and is used to vary the length of nozzle body 23, and thereby nozzle 20. Intermediate nozzle body segment 27 is substantially devoid of a nozzle heater in direct contact with it. Upstream nozzle body segment 26 has an upstream melt channel 67, intermediate nozzle body segment 27 has an intermediate melt channel 68, and downstream nozzle body segment has a downstream melt channel 69. These melt channels 67, 68 and 69 collectively define a nozzle channel 31, which is in fluid communication with the manifold channel 14 of the manifold 12. The mold cavity in communication with nozzle 20 may be a different section of the mold cavity 30, which receives melt via nozzle 24 or, alternatively, nozzle 24 may communicate with a separate mold cavity.

Upstream nozzle body segment 26 includes an upstream end 46 adjacent manifold 12. Upstream nozzle body segment 26 is in contact with and directly or actively heated by a nozzle heater 60, which is powered through an electrical connector 62.

In one embodiment, an upstream end 50 of intermediate nozzle body segment 27 is connected to a downstream end 48 of upstream nozzle body segment 26 by a threaded engagement (not shown), and a downstream end 52 of the intermediate nozzle body segment 27 is connected to an upstream end 54 of the downstream nozzle body segment 29 by a threaded engagement (not shown). In an alternate embodiment, intermediate nozzle body segment 27 can be connected to upstream nozzle body segment 26 and downstream nozzle body segment 29 by other means for connecting. For example, intermediate nozzle body segment 27 can be connected to upstream nozzle body segment 26 and downstream nozzle body segment 29 by a press fit engagement, an interference fit engagement, brazing, welding or fusing, as is known to one skilled in the relevant art. The means for connecting intermediate nozzle body segment 27 to upstream and downstream nozzle body segments 27, 29 is such that there is no relative movement, for example sliding movement, between the nozzle body segments. As such, during use, if one nozzle body segment moves due to thermal expansion, the other nozzle body segments connected thereto also move.

Both the manifold and the nozzle body segments will expand due to thermal expansion caused by heating during use. Pressure discs 19 are configured so that as the manifold expands during use, the pressure discs 19 bias the manifold 12 downwardly. Thus, pressure discs 19 maintain the predetermined width of insulative air space 37.

Similar to nozzle 20, the nozzle 24 also includes a nozzle tip 38 retained in a downstream end 56 of the downstream nozzle body segment 29. In one embodiment, the nozzle tip 38 is connected to downstream nozzle body segment 29 via a threaded connection 36. Downstream end 56 of downstream nozzle body segment 29 is located adjacent a mold gate 58. As thermal expansion of the nozzles occur, the each nozzle body expands downwardly, due to the biasing force of the pressure discs 19, so that the nozzle tips 38 are securely seated against the mold gates 58. The downward force of manifold 12 due to thermal expansion and the biasing force of the pressure discs 19 also ensures a secure seal between manifold channel 14 and the nozzle melt channels 25 and 31.

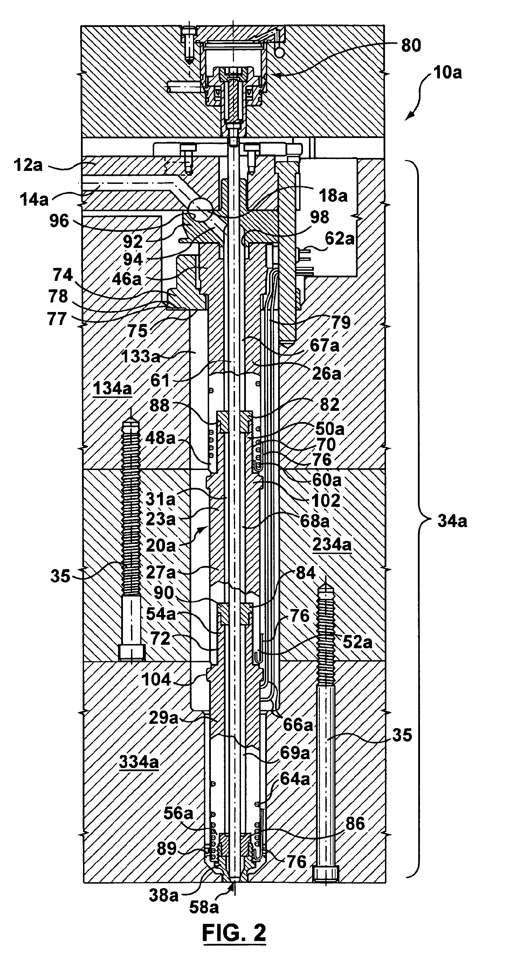

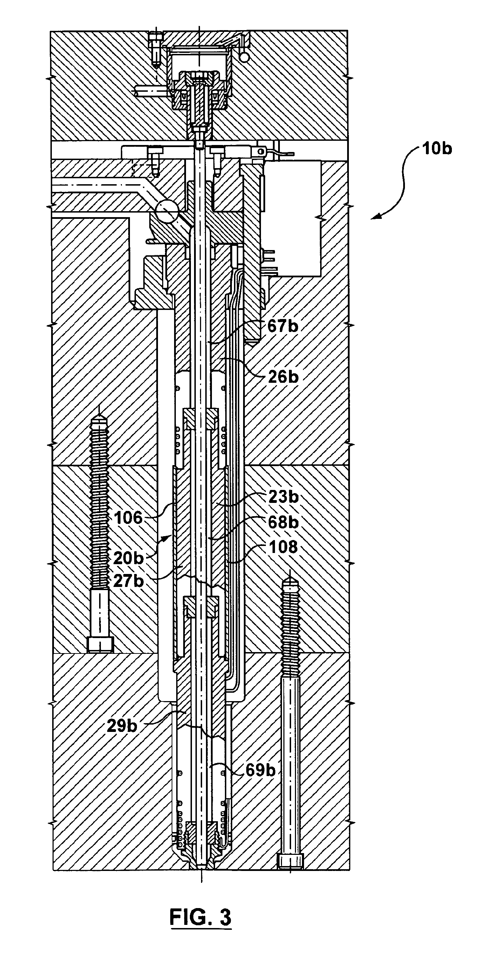

Downstream nozzle body segment 29 is in contact with and directly or actively heated by a nozzle heater 64, which is powered through an electrical connector 66. Leads (not shown) for the electrical connector 66 may be drawn through a bore 11 through mold plate 234. Alternatively, leads from the electrical connector 66 may be drawn along the nozzle 20 through opening 133 to exit the injection molding apparatus 10 at the same location as leads (not shown) from the electrical connector 62. Such an arrangement is shown in Figures 2 and 3. As is apparent in Figure 1, unlike the upstream and downstream nozzle body segments 26, 29, intermediate nozzle body segment 27 does not include a separate nozzle heater. That is, intermediate nozzle body segment 27 is not directly or actively heated by a separate nozzle heater. Rather, heat that may be transferred to intermediate nozzle body segment 27 is passed substantially indirectly through upstream and downstream nozzle body segments 26 and 29. As such, intermediate nozzle body segment 27 is heated substantially passively through heat transfer from upstream and downstream nozzle body segments 26 and 29.

In one embodiment, intermediate nozzle body segment 27 is made of a thermally conductive material. For example, intermediate nozzle body segment 27 can be made of any steel, such as die steel, mold steel or stainless steel, or Beryllium-Cooper, or by any other suitable thermally conductive material, as would be apparent to one skilled in the relevant art (e.g. having a thermal conductivity higher than 22 W/mK). In order for the intermediate nozzle body segment 27 to retain and provide the desired amount of heat to the molten material without having an active heater in contact with it, the intermediate nozzle body segment has to have a significant size with respect to the entire nozzle or with respect to the other nozzle body segments. The size of the intermediate nozzle body segment can be expressed in terms of either volume, mass or other equivalent parameters. Furthermore, the intermediate nozzle body segment has to have a surface contact area that closely matches the surface contact areas of the two other nozzle body segments. In one embodiment intermediate nozzle body segment 27 has a mass or volume that is at least 10% of the overall nozzle body mass or volume. Upstream nozzle body segment 26 and downstream nozzle body segment 29 are also made of thermally conductive materials, as discussed above. Intermediate nozzle body segment 27 can be made of a material having a thermal conductivity that is the same as, less than or greater than the thermal conductivity of the upstream nozzle body segment 26 and/or the downstream nozzle body segment 29.

The mold gates 58, which are provided at the entrance to the mold cavity 30, are selectively openable to permit delivery of melt to the mold cavities 30. The nozzles 20 and 24 may be thermal-gated or valve-gated.

Another embodiment of an injection molding apparatus 10a is shown in Figure 2. The injection molding apparatus 10a includes a nozzle 20a that is coupled to an outlet 18a of a manifold 12a. Nozzle 20a includes a nozzle body 23a having an upstream nozzle body segment 26a, an intermediate nozzle body segment 27a and a downstream nozzle body segment 29a. The nozzle body segments 26a, 27a, 29a define a nozzle channel 31a, which is in fluid communication with a manifold channel 14a of the manifold 12a.

The injection molding apparatus 10a includes a split mold plate 34a, which is similar to the split mold plate 34 of Figure 1, having separate mold plates 134a, 234a, and 334a. A mold cavity (not shown) is located downstream of plate 334 and receives melt from nozzle channel 31a, through mold gate 58a. The mold gate 58a is selectively openable by a valve pin 61, which extends through the nozzle channel 31 a. The valve pin 61 is driven by an actuator 80. The actuator 80 may be pneumatic, hydraulic, electric or any suitable type of actuator.

Upstream nozzle body segment 26a has an upstream end 46a and a downstream end 48a. Downstream end 48a of upstream nozzle body segment 26a is connected to an upstream end 50a of intermediate nozzle body segment 27a by a threaded engagement 70. The connection of upstream nozzle body segment 26a to intermediate nozzle body segment 27a is such that a surface of downstream end 48a comes in contact with a surface of upstream end 50a to allow heat to be passed from heated upstream nozzle body segment 26a to intermediate nozzle body segment 27a. Downstream end 52a of intermediate nozzle body segment 27a is connected to an upstream end 54a of downstream nozzle body segment 29a by a threaded engagement 72. Similarly, the connection of intermediate nozzle body segment 27a to downstream nozzle body segment 29a is such that a surface of downstream end 52a comes in contact with a surface of upstream end 54a to allow heat to be passed from heated downstream nozzle body segment 29a to intermediate nozzle body segment 27a. Projections 102 and 104 are provided at the upstream ends 50a and 54a of intermediate nozzle body segment 27a and downstream nozzle body segment 29a, respectively. The projections 102, 104 are shaped to allow for engagement with a tool to facilitate connection and disconnection of the nozzle body segments 27a, 29a from the injection molding apparatus 10a.

Because of the length of an extended nozzle, such as nozzle 20a, a small misalignment of the valve pin 61 in an upstream area of nozzle 20a may skew the valve pin 61 so as to be greatly misaligned downstream at mold gate 58a. Thus, valve pin guides 82, 84 and 86 are provided along the length of the nozzle 20a. Valve pin guide 82 is received in a recess 88, which is formed by upstream nozzle body segment 26a and intermediate nozzle body segment 27a. The valve pin guide 82 is retained by the threaded connection 70 between the upstream and intermediate nozzle body segments 26a and 27a. Valve pin guide 84 is positioned similarly in a recess 90 between intermediate nozzle body segment 27a and downstream nozzle body segment 29a and is retained by threaded connection 72. Valve pin guide 86 is positioned and retained, between a nozzle tip 38a and a downstream end 56a of the downstream nozzle 29a. The downstream end 56a of downstream nozzle body segment 29a further includes a flange 89 which contacts mold plate 334a to align nozzle 20a with mold gate 58a.

Each of valve pin guides 82, 84 and 86 comprise one or more channels therein (not shown) to allow melt to flow past each of valve pin guides 82, 84 and 86, while maintaining the alignment of the valve pin 61 in the center of nozzle channel 31a and aligned with mold gate 58a. Suitable valve pin guides are disclosed in U.S. Application No. 10/751,507 assigned to Mold-Masters Ltd., which is incorporated herein by reference in its entirety.

To further guide the valve pin 61 and keep it aligned with mold gate 58a, a pin support 92 is positioned between the upstream end 46a of upstream nozzle body segment 26a and manifold 12a. Pin support 92 includes a melt channel 94 which is aligned and in fluid communication with manifold channel 14a at an upstream end 96 of channel 94 and with nozzle channel 31 a at a downstream end 98 of channel 94.

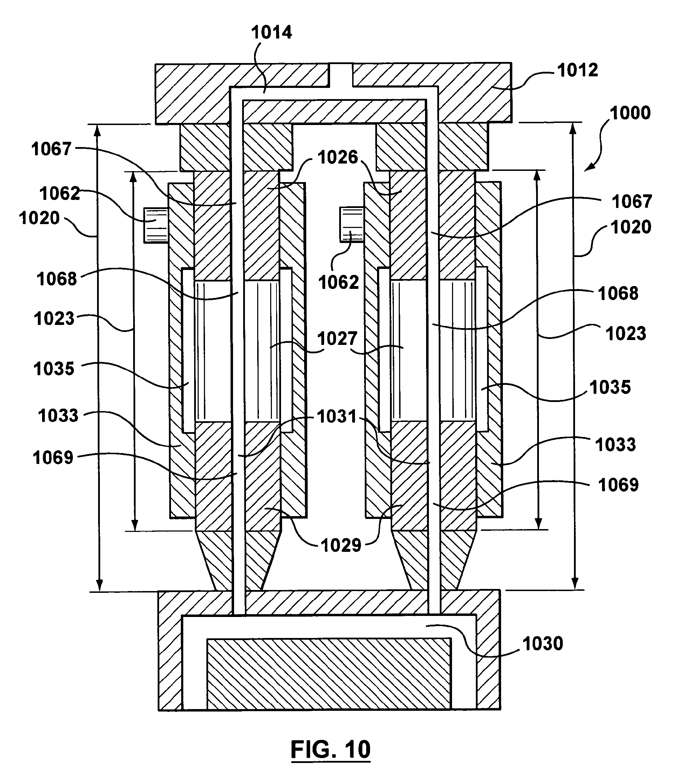

Nozzle 20a includes nozzle heaters 60a and 64a, embedded into nozzle body segments 26a and 29a, respectively, as well as electrical connections 62a and 66a, which are connected to nozzle heaters 60a and 64a, respectively. Although the nozzle heaters 60a and 64a shown in this embodiment are spiral heaters embedded in an exterior surface of the nozzle body segments, other means for heating could be used. For example, heaters 60a and 64a could comprise heating elements embedded into a sleeve(s) (such as shown in FIG. 10 discussed below), heating rods embedded into the nozzle body segments, or cartridge heaters, as would be apparent to one skilled in the relevant art. Nozzle 20a also includes thermocouples for monitoring the temperature of each of the nozzle body segments 26a, 27a and 29a, such as thermocouples 76 shown embedded into nozzle body segments 26a, 27a, and 29a in Figure 2. A controller (not shown) is coupled to each of the thermocouples 76 and is used to control nozzle heaters 60a, 64a.

A collar 74 surrounds a portion of upstream end 46a of upstream nozzle body segment 26a to position and align the upstream nozzle body segment 26a and thus nozzle 20a with respect to manifold 12a, pin support 92 and mold gate 58a. A lower surface 75 of the collar 74 abuts a shoulder 78 provided in opening 133a of the split mold plate 34a to locate the sleeve relative to the mold plate 134a. The collar 74 is made of a material having a low thermal conductivity, for example titanium or ceramic, to act as an insulator to generally prevent heat transfer from upstream nozzle body segment 26a to mold plate 134a. Collar 74 also includes a cavity 77 to limit the contact between the lower surface 75 of the collar 74 and shoulder 78 of mold plate 134a, thus reducing the heat loss from upstream nozzle body segment 26a even further. Collar 74 also includes an opening 79 through which leads for electrical connections 62a and 66a extend to be externally connected to a power source (not shown).

Mold plates 134a, 234a and 334a are pressed and held together during the molding process by bolts 35. In an alternative embodiment, the bolts 35 are releasable to eject molded articles from mold cavities that are provided between the mold plates 134a, 234a, 334a. For example, one manifold 12a may inject melt into different mold cavities that are provided between mold plates 134a and 234a and/or mold plates 234a and 334a, simultaneously. In such an arrangement, shorter nozzles would be provided to communicate with the mold cavities located closer to the manifold 12a. This arrangement facilitates the production of more or larger molded articles with a single manifold 12a. Split mold plate 34a may have more or less mold plates forming a variety of configurations in an injection molding apparatus of the present invention, as would be apparent to one skilled in the art.

As shown in Figure 2, the intermediate nozzle body segment 27a does not include a separate heater. Instead, the intermediate nozzle body segment 27a is heated substantially through contact with the upstream and downstream nozzle body segments 26a and 29a, which are heated by heaters 60a and 64a, respectively. Because the intermediate nozzle body segment 27a does not directly contact the split mold plate 34a, the intermediate nozzle body segment does not loose heat as quickly as the upstream and downstream nozzle body segments 26a, 29a. Therefore, the intermediate nozzle body segment 27a receives sufficient heat from the upstream and downstream nozzle body segments 26a, 29a to maintain the intermediate nozzle body segment 27a at a desired temperature.

In an alternative embodiment, the intermediate nozzle body segment 27a is provided with a conductive outer layer, such as a sleeve or coating. The conductive outer layer improves the efficiency of heat distribution along the length of the intermediate nozzle body segment 27a. The conductive outer layer may be comprised of copper, copper alloy or any other suitable conductive material. In one embodiment, the conductive layer may be applied by spraying or dipping the conductive material directly onto the intermediate nozzle body segment 27a.

In operation, melt is injected from the machine nozzle into the manifold channel 14a. The manifold channel 14a distributes the melt to a plurality of nozzle channels, including nozzle channel 31a of nozzle 20a. Melt is delivered from the nozzle channel 31 a to the mold cavity through mold gate 58a. During the injection process, the melt is maintained at a generally uniform temperature as it travels through the upstream, intermediate and downstream nozzle body segments 26a, 27a and 29a of the nozzle 20a. The generally uniform temperature of nozzle 20a is maintained because the heaters 60a, 64a of nozzles body segments 26a and 29a, respectively, are independently controlled. By controlling the heaters 60a and 64a independently, more heat may be applied to the nozzle body segment 26a or 29a that experiences greater heat loss due to contact with the cold split mold plate 34a. The intermediate nozzle body segment 27a absorbs heat from the upstream and downstream nozzle body segments 26a and 29a. A more even distribution of the heat along the intermediate nozzle body segment 27a may be achieved by using a conductive outer layer.

Referring to Figure 3, another embodiment of an injection molding apparatus 10b is shown. This embodiment is similar to the embodiment of Figure 2, with the addition of a conductive sleeve 106 surrounding intermediate nozzle body segment 27b of nozzle body 23b of nozzle 20b as an alternate conductive layer. The conductive sleeve 106 is in direct contact with an outer surface 108 of the intermediate nozzle body segment 27a. Similar to the conductive outer layer described in relation to Figure 2, the conductive sleeve 106 functions to distribute the heat transferred from upstream and downstream nozzle body segments 26b, 29b along the length of the intermediate nozzle body segment 27b. The conductive sleeve 106 is comprised of copper, copper alloy or another suitable conductive material.

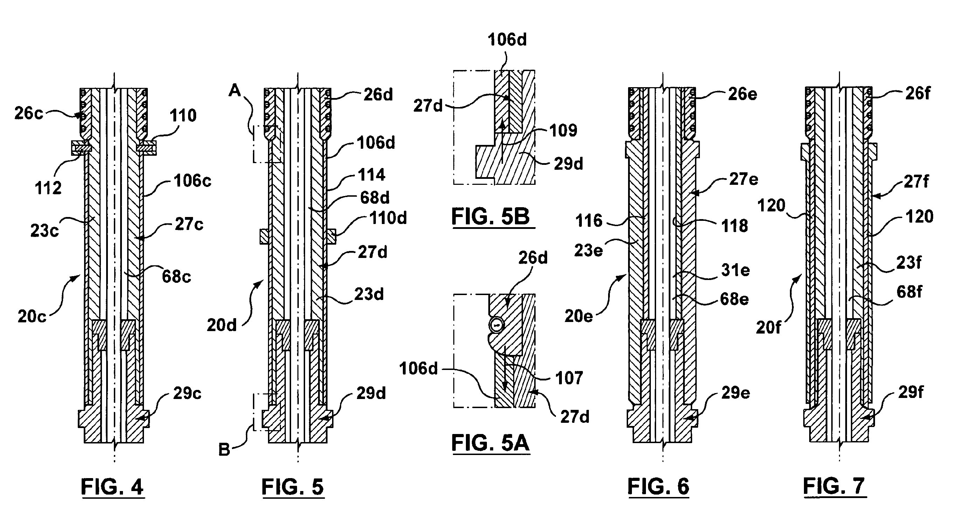

Another embodiment of a nozzle 20c is shown in Figure 4. The nozzle 20c of Figure 4 has a nozzle body 23c with an upstream nozzle body segment 26c, an intermediate nozzle body segment 27c and a downstream nozzle body segment 29c. Nozzle 20c is similar to the nozzle 20b of Figure 3, however, nozzle 20c further includes a tool engaging projection 110. The tool engaging projection 110 is coupled to the intermediate nozzle body segment 27c, through conductive sleeve 106c, by fasteners 112. The fasteners 112 may be threaded, as shown, or alternatively, the fasteners 112 may be another suitable type of fastener. If desired, the tool engaging projection 110 may be coupled only to the conductive sleeve 106c.

Referring to Figure 5, another embodiment of a nozzle 20d is shown. Nozzle 20d is similar to nozzle 20c of Figure 4 however, tool engaging projection 110d is coupled to an outer surface 114 of conductive sleeve 106d by brazing or soldering. Further, the tool engaging projection 110d is located generally midway along the conductive sleeve 106d. This allows for an uninterrupted flow of heat from upstream nozzle body segment 26d to intermediate nozzle body segment 27d of nozzle body 23d, as indicated by arrow 107 in Figure 5A. Similarly, there is an uninterrupted flow of heat from downstream nozzle body segment 29d to intermediate nozzle body segment 27d of nozzle body 23d, as indicated by arrow 109 in Figure 5B.

In an alternative embodiment, an insulative layer, such as a coating (not shown), is applied over the thermally conductive outer layer. For example, an insulative layer could be applied over conductive sleeve 106, 106c, 106d of any of the previous embodiments. The insulative layer provides thermal insulation, so as to minimize radiant heat loss from the intermediate nozzle body to the ambient. The insulative layer is constructed from a low thermally conductive material to provide thermal insulation and to avoid heat loss radiating from the intermediate nozzle body to the ambient. Examples of suitable insulative layer materials are described in U.S. Provisional Application No. 60/460,417, which is incorporated herein by reference in its entirety. Suitable insulative layer materials include ceramics such as alumina (Al₂O₃), silicon nitride (Si₃N₄), or silicon carbide (SiC) and a bi-axially oriented material, such as liquid crystal polymer, for example. The insulative layer may also be constructed from a ceramic-coated aeromet tube.

Another embodiment of a nozzle 20e is shown in Figure 6. In this embodiment, intermediate nozzle body 27e includes a conductive layer 116 that surrounds the intermediate portion of nozzle channel 31 e of nozzle body 23e. The conductive layer 116 may be a coating that is applied directly to an inner surface 118 of the nozzle channel 31 e. The conductive layer may be comprised of copper, copper alloy or another suitable conductive material. Alternatively, a conductive sleeve could be used which is inserted into a nozzle channel 31e. The conductive layer 116 functions in a similar manner as the conductive sleeve 106, 106c, 106d of the previous embodiments to distribute the heat transferred from the upstream and downstream nozzle body segments 26e, 29e along the length of the intermediate nozzle body segment 27e.

Another embodiment of a nozzle 20f is shown in Figure 7. In this embodiment, intermediate nozzle body 27f includes an alternate conducting means that includes conductive rods 120 disposed longitudinally through intermediate nozzle body segment 27f of nozzle body 23f. The conductive rods 120 may be comprised of copper, copper alloy or another suitable conductive material. The conductive rods 120 function in a similar manner as the conductive sleeve 106, 106c, 106d of the previous embodiments to distribute the heat transferred from the upstream and downstream nozzle body segments 26f, 29f along the length of the intermediate nozzle body segment 27f.

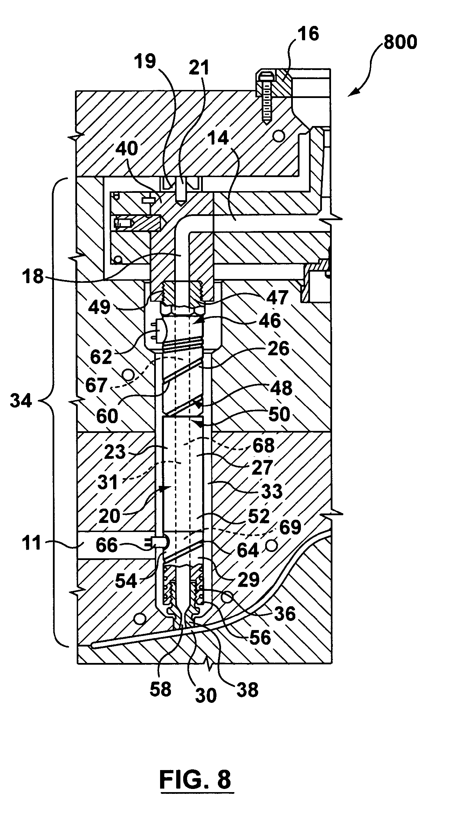

Figure 8 shows a portion of another embodiment of an injection molding apparatus 800 that is similar to injection molding apparatus 10 of Figure 1, except that in this embodiment, the nozzle head is connected to the manifold via a threaded connection. In particular, the nozzle head 47, which is located at upstream end 46 of upstream nozzle body segment 26 adjacent manifold 12, is coupled to manifold plug 40 via a threaded connection 49.

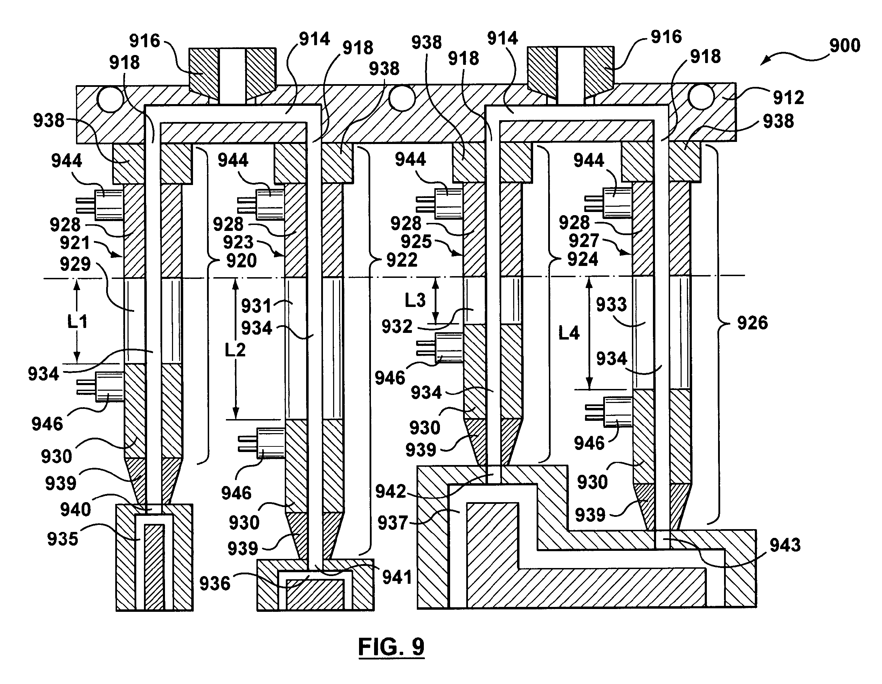

Figure 9 shows an embodiment of the present invention in use in a family mold. A family mold is a mold in which more than one component of a multi-component product are molded concurrently in the same mold in separate mold cavities. Figure 9 shows an injection molding system 900 including a manifold 912 having two manifold channels 914 extending therethrough. Two manifold bushings 916 are located at inlet of each manifold channel 914 to receive a melt stream of moldable material from machine nozzles (not shown) and to deliver the melt stream to manifold outlets 918. A heating element (not shown) heats manifold 912 to maintain the melt streams passing through manifold channels 914 at a desired temperature. The heating element of the manifold may be embedded into or otherwise surround a surface of the manifold 912.

Injection molding apparatus 900 has four nozzles, including a first nozzle 920, a second nozzle 922, a third nozzle 924 and a fourth nozzle 926. Each nozzle 920, 922, 924 and 926 includes a respective nozzle body 921, 923, 925 and 927 made of three nozzle body segments. First nozzle body 921 is made of an upstream nozzle body segment 928, an intermediate nozzle body segment 929 and a downstream nozzle body segment 930. Second nozzle body 923 has upstream nozzle body segment 928, an intermediate nozzle body segment 931 and downstream nozzle body segment 930. Third nozzle body 925 has upstream nozzle body segment 928, an intermediate nozzle body segment 932 and downstream nozzle body segment 930. Finally, fourth nozzle body 927 has upstream nozzle body segment 928, intermediate nozzle body segment 933 and downstream nozzle body segment 930. As shown, the intermediate nozzle body segments 929, 931, 932 and 933 for each nozzle body are a different length L1, L2, L3 and L4, such that the length of the nozzle bodies 921, 923, 925 and 927 varies, respectively.

The nozzle body segments of each nozzle define a nozzle channel 934 that delivers melt streams from manifold outlets 918 to various mold cavities. Specifically, the melt channel 934 of first nozzle 920 delivers a melt stream to a first mold cavity 935. The melt channel 934 of second nozzle 922 delivers a melt stream to a second mold cavity 936. Finally, the melt channels 931 of third nozzle 924 and fourth nozzle 926 deliver melt streams to a third mold cavity 937. A nozzle head 938 for each nozzle 920, 922, 924 and 926 is adjacent the manifold 912. A nozzle tip 939 of nozzle 920 is adjacent a mold gate 940 leading to first mold cavity 935. A nozzle tip 939 of nozzle 922 is adjacent a mold gate 941 leading to second mold cavity 936. Nozzle tips 939 of nozzles 924 and 926 are adjacent mold gates 942 and 943, respectively, leading to third mold cavity 937. In this embodiment, upstream nozzle body segments 928 are each in contact with and directly or actively heated by a nozzle heater (not shown), which is powered through an electrical connector 944. Similarly, downstream nozzle body segments 930 are each in contact with and directly or actively heated by a nozzle heater (not shown), which is powered through an electrical connector 946.

Intermediate nozzle body segments 929, 931, 932 and 933 are used to vary the length of nozzle bodies 921, 923, 925 and 927, and thereby nozzles 920, 922, 924 and 926. Intermediate nozzle body segments 929, 931, 932 and 933 are substantially devoid of a nozzle heater in direct contact with them. That is, intermediate nozzle body segments 929, 931, 932 and 933 are not directly or actively heated by a separate nozzle heater. Rather, any heat that may be transferred to intermediate nozzle body segments 929, 931, 932 and 933 is passed substantially indirectly through upstream and downstream nozzle body segments 928 and 930. As such, intermediate nozzle body segments 929, 931, 932 and 933 are heated substantially passively through heat transfer from upstream and downstream nozzle body segments 928 and 930.

Similar to the embodiment discussed above with respect to Figure 1, upstream nozzle body segment 928 can be connected to the respective intermediate nozzle body segments 929, 931, 932 and 933 by a threaded engagement, a press fit engagement, an interference fit engagement, brazing, welding or fusing. Similarly, downstream nozzle body segment 930 can be connected with the respective intermediate nozzle body segments 929, 931, 932 and 933 by a threaded engagement, a press fit engagement, an interference fit engagement, brazing, welding or fusing. The means for connecting the intermediate nozzle body segments to upstream and downstream nozzle body segments is such that there is no relative movement, for example sliding movement, between the nozzle body segments. As such, during use, if one nozzle body segment moves due to thermal expansion, the other nozzle body segments connected thereto also move.

Figure 10 shows another embodiment of an injection molding apparatus 1000 of the present invention. Apparatus 1000 includes two nozzles 1020, each positioned between a manifold 1012 and a mold cavity 1030. Nozzles 1020 each include a nozzle body 1023 made of three nozzle body segments: an upstream nozzle body segment 1026, an intermediate nozzle body segment 1027 and a downstream nozzle body segment 1029, for delivering a melt stream from a manifold channel 1014 to mold cavity 1030. As in the previous embodiments, intermediate nozzle body segment 1027 can be of varying length such that it is used to vary the length of nozzle body 1023, and thereby nozzle 1020. Intermediate nozzle body segment 1027 is also substantially devoid of a nozzle heater in direct contact with it. Intermediate nozzle body segment 1027 is disposed between the upstream nozzle body segment 1026 and the downstream nozzle body segment 1029. The nozzle body segments 1026, 1027 and 1029 define a nozzle channel 1031, which is in fluid communication with the manifold channel 1014 of the manifold 1012.

Apparatus 1000 includes heater sleeves 1033 disposed about each nozzle 1020 and connected to a nozzle heater (not shown). In one embodiment, the nozzle heater is embedded into and along the length of each sleeve 1033. An electrical connection 1062 is connected to the nozzle heater. Nozzles 1020 and/or sleeves 1033 may also include thermocouples (not shown) for monitoring the temperature of each of the nozzle body segments 1026, 1027 and 1029, and for controlling the nozzle heaters. Sleeves 1033 are preferably made of a material having relatively high thermal conductivity so that heat from the nozzle heater is transferred through sleeves 1033 to the underlying nozzles 1020. Sleeves 1033 each have a cut-out 1035 adjacent intermediate nozzle body segments 1027 so that the sleeves 1033 do not come in direct contact with segments 1027. The cut-outs 1035 provide an air gap between each sleeve 1033 and segment 1027. The air acts as an insulator so that the heat from heater sleeves 1033 is not transferred to intermediate nozzle body segments 1027.

The many features and advantages of the invention are apparent from the detailed specification and, thus, it is intended by the appended claims to cover all such features and advantages of the invention that fall within the scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

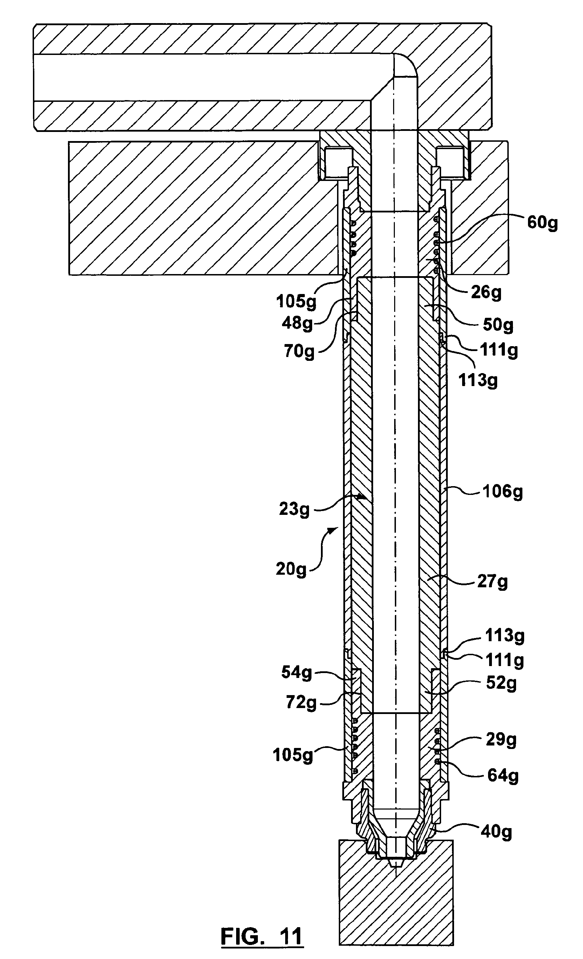

Another embodiment of a nozzle 20g is shown in Figure 11. In this embodiment, nozzle 20g has a nozzle body 23g with an intermediate nozzle body segment 27g and two standard nozzle body segments used as an upstream nozzle body segment 26g and a downstream nozzle body segment 29g. Upstream nozzle body segment 26g and downstream nozzle body segment 29g are heated by heaters 60g and 64g that are embedded. An upstream end 50g of intermediate nozzle body segment 27g is connected to a downstream end 48g of upstream nozzle body segment 26g by a threaded engagement 70g, and a downstream end 52g of intermediate nozzle body segment 27g is connected to an upstream end 54g of downstream nozzle body segment 29g by a threaded engagement 72g. The length of intermediate nozzle body segment 27g may be selected to construct a nozzle 20g of any desired overall length.

A retaining sleeve 105g is disposed about each of upstream nozzle body segment 26g and downstream nozzle body segment 29g and is constructed to have a thermal expansion rate close to that of upstream nozzle body segment 26g and downstream nozzle body segment 29g. A conductive sleeve 106g is disposed about intermediate body segment 27g and is connected to each retaining sleeve 105g by a shoulder interface. The shoulder interface is created by a shoulder 111g on each of retaining sleeves 105g that is configured to compliment a shoulder 113g on each end of conductive sleeve 106g. In this embodiment, shoulder 111g and shoulder 113g are configured such that conductive sleeve 106g is located radially inward from retaining sleeve 105g at the shoulder engagement. Conductive sleeve 106g is comprised of copper, copper alloy, tin or another suitable conductive material. Retaining sleeves 105g are comprised of steel, tin or another suitable conductive material.

The shoulder engagement of retaining sleeves 105g with conductive sleeve 106g functions to control the thermal expansion of conductive sleeve 106g with respect to nozzle body 23g. For example, in embodiments where intermediate nozzle body 27g has a lower thermal expansion rate than conductive sleeve 106g, retaining sleeves 105g can be configured to expand at a rate similar to intermediate nozzle body 27g so the shoulder engagement would limit the ability of conductive sleeve 106g to separate from intermediate nozzle body 27g due to thermal expansion.

Nozzle 20g includes a modular construction wherein a standard segment is used for upstream nozzle body segment 26g and downstream nozzle body segment 29g, making them interchangeable. In this embodiment, threaded engagement 70g and threaded engagement 72g are both configured such that intermediate nozzle body segment 27g provides the male threaded surface while each of upstream nozzle body segment 26g and downstream nozzle body segment 29g provides the female threaded surface.

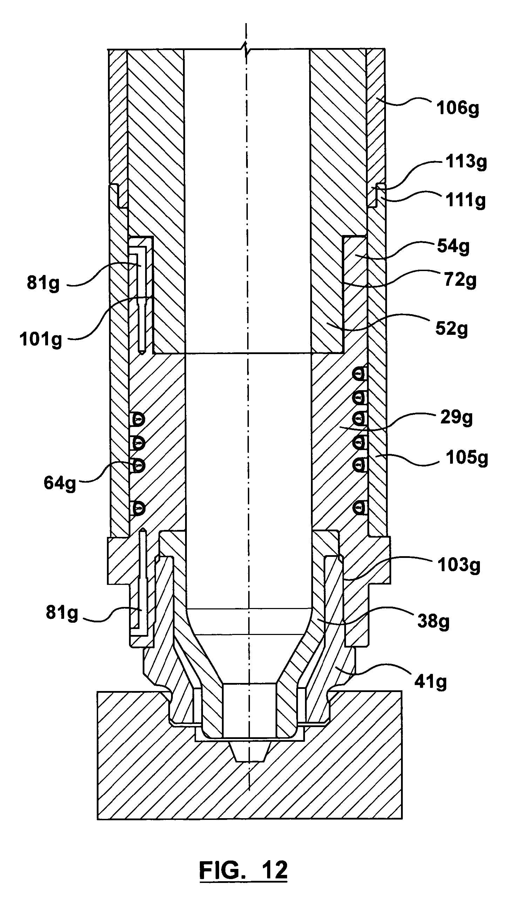

A downstream portion of nozzle 20g is shown in greater detail in Figure 12. Downstream nozzle body segment 29g includes two female threaded surfaces 101g, 103g. The upstream threaded surface 101g forms a portion of threaded engagement 72g and downstream threaded surface 103g engages a tip retainer 41 g that connects a nozzle tip 38g to downstream nozzle body segment 29g. Downstream nozzle body segment 29g further includes thermocouple tubes 81 g. Multiple thermocouple tubes 81 g may be provided, as shown, so that thermocouples (not shown) may be placed at various locations along the length of nozzle 20g.

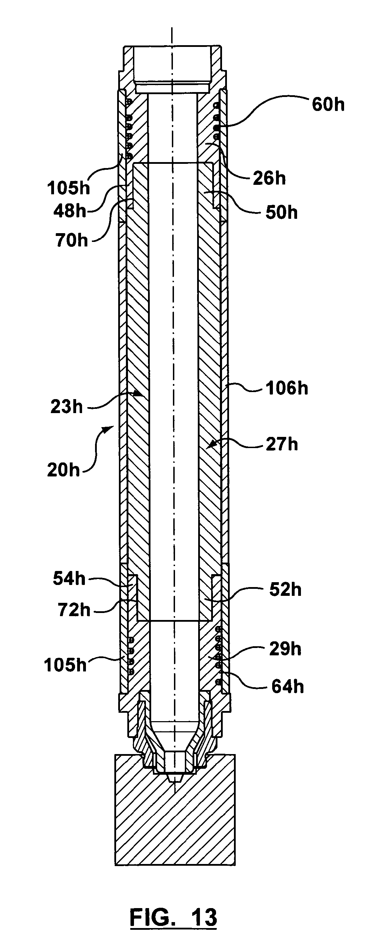

Another embodiment of a nozzle 20h is shown in Figure 13. Nozzle 20h is similar to nozzle 20g of Figure 11 in that it includes a nozzle body 23h with a standard upstream nozzle body segment 26h, an intermediate nozzle body segment 27h, a standard downstream nozzle body segment 29h, and embedded heaters 60h and 64h. In this embodiment, however, a conductive sleeve 106h is disposed about intermediate body segment 27h and abuts each of a pair of retaining sleeves 105h. Heat from each of upstream nozzle body segment 26h and downstream body segment 29h can transfer to each of the respective retaining sleeves 105h. The abutment of retaining sleeves 105h with conductive sleeve 106h utilizes frictional forces to retain conductive sleeve 106h when the expansion rate of conductive sleeve 106h differs from retaining sleeves 105h. The contact between conductive sleeve 106h and retaining sleeves 105h also creates an uninterrupted flow of heat from upstream nozzle body segment 26h and downstream nozzle body segment 29h to conductive sleeve 106h which further transfers heat to intermediate body portion 27h.

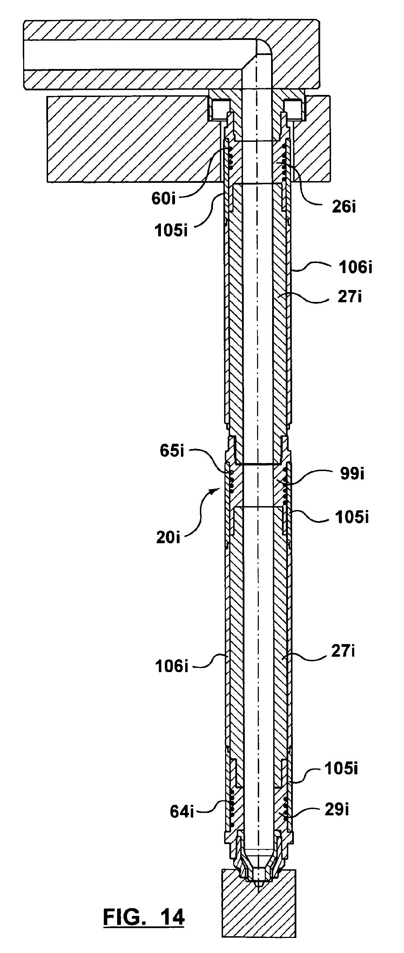

Another embodiment of a nozzle 20i is shown in Figure 14. Nozzle 20i is similar to nozzle 20g of Figure 11, however, two additional body segments are included. Nozzle 20i includes, in addition to the heated standard segments used as an upstream nozzle body segment 26i and a downstream nozzle body segment 29i, a pair of intermediate nozzle body segments 27i, a pair of conductive sleeves 106i, an additional heated standard nozzle body segment 99i, and multiple retaining sleeves 105i. Each of the upstream nozzle body segment 26i, downstream nozzle body segment 29i and standard nozzle body segment 99i are heated by an embedded heater 60i, 64i and 65i, respectively. Standard nozzle body segment 99i is interposed between the pair of intermediate nozzle body segments 27i and is connected to each of the pair of intermediate nozzle body segments 27i by a threaded engagement. In this embodiment, standard nozzle body segment 99i is configured to be interchangeable with upstream nozzle body segment 26i or downstream nozzle body segment 29i so that nozzle 20i may be easily extended. Although conductive sleeves 106i and retaining sleeves 105i are shown connected by shoulder engagements, it should be appreciated that any interface, such as an abutting connection, could be included.

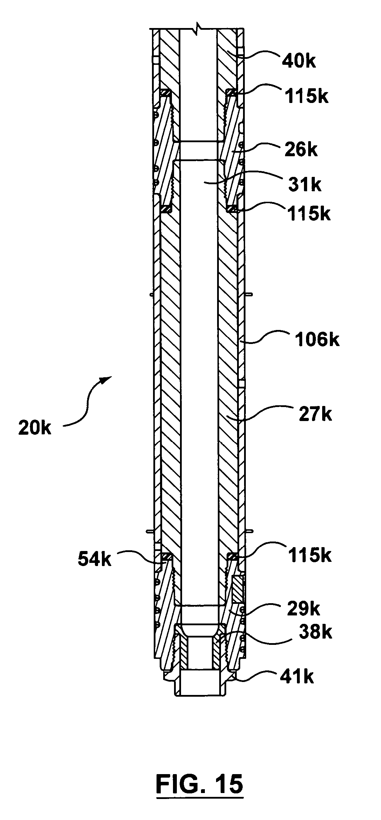

In another embodiment, a nozzle 20k, a downstream portion of which is shown in Figure 15, includes a manifold plug 40k, a heated standard upstream nozzle body segment 26k , a standard heated downstream nozzle body segment 29k, an intermediate nozzle body segment 27k, a conductive sleeve 106k, and conductive washers 115k. Nozzle 20k also includes a nozzle tip 38k that is retained within nozzle body segment 29k by a tip retainer 41k. Unlike nozzle 20i, however, nozzle 20k does not include retaining sleeves disposed over heated segments 26k and 29k. Conductive sleeves 106k interface with the adjacent nozzle body segments 26k and 29k with abutting connections and are held in place by compressive forces therebetween.

Conductive washers 115k are sandwiched between adjacent nozzle body segments. For example, conductive washers 115k are sandwiched between an upstream end of nozzle body segment 26k and the adjacent manifold plug 40k and between a downstream end of nozzle body segment 26k and the adjacent intermediate nozzle body segment 27k. Another conductive washer 115k is sandwiched between an upstream end 54k of nozzle body segment 29k and the adjacent intermediate nozzle body segment 27k.

Conductive washers 115k may be made of a material that is less stiff than the adjacent segments so that it is compressible when the adjacent segments are coupled. The compressibility protects each of the adjacent segments because during thermal expansion the washer can crush first. The compressibility of washers 115k also helps to increase the contact between each washer 115k and the adjacent parts, therefore providing better heat conduction between adjacent parts while allowing the adjacent parts to seal properly to eachother. For example, nozzle body segments 26k and 27k seal against each other to provide a continuous melt channel 31 k and washer 115k is compressed between a downstream end of segment 26k and a shoulder on the upstream portion of segment 27k.

The material of conductive washers 115k may also be chosen to have a high thermal conductivity. For example, conductive washers 115k may be constructed from copper, brass, aluminum or any other material known to a person having skill in the relevant art. The adjacent segments may be designed so that conductive washers 115k are compressed or crushed after assembly. Additionally, conductive washers 115k can be conductive spring washers that compress when the adjacent segments are coupled.

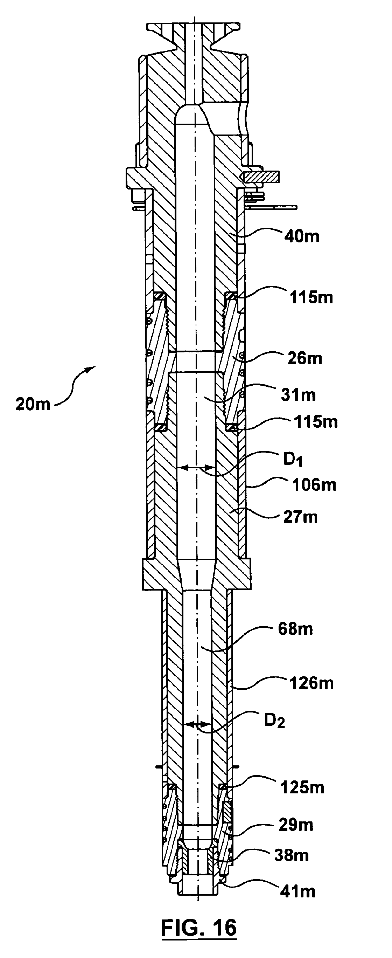

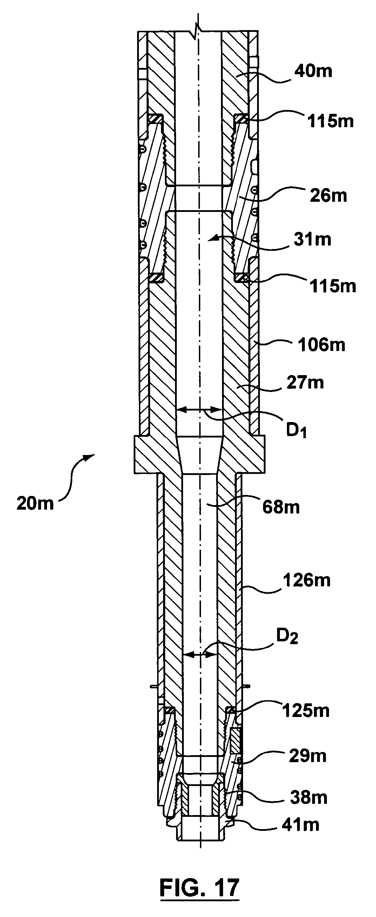

Figures 16 and 17 illustrate another embodiment, nozzle 20m. Similar to nozzle 20 of Figure 8, nozzle 20m includes a manifold plug 40m, an upstream nozzle body segment 26m, an intermediate nozzle body segment 27m and a downstream nozzle body segment 29m that form a continuous melt channel 31m. Conductive sleeves 106m, 126m and conductive washers 115m, 125m are also provided to improve heat conduction. Intermediate nozzle body segment 27m includes an intermediate melt channel 68m that transitions from a first diameter D1 to a second smaller diameter D2.

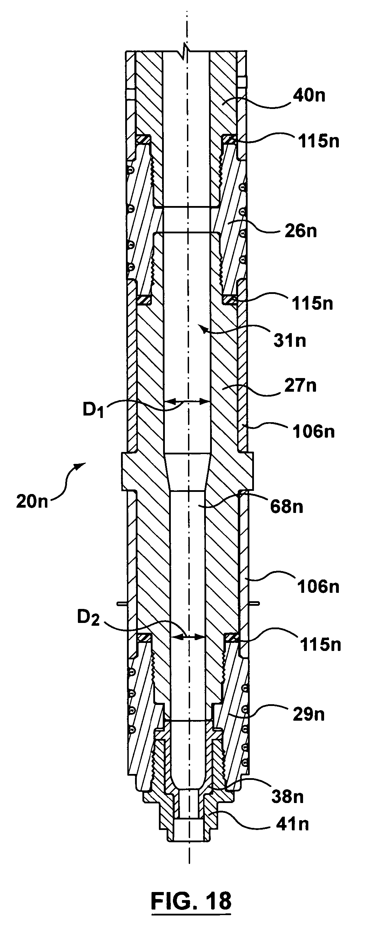

In nozzle 20m, the outer diameter of intermediate nozzle body segment 27m is larger in the portion where melt channel 68m has diameter D1 and smaller in the portion where melt channel 68m has diameter D2. As a result, conductive sleeves 106m and 126m have different diameters to match the diameter of nozzle body segment 27m. In addition, conductive washers 115m and 125m have different diameters to match the differing outer diameters of nozzle 20m along its length. As a further result of the varying outer diameter of nozzle 20m, upstream nozzle body segment 26m and downstream nozzle body segment 29m are not identical standard parts. Rather, downstream nozzle body segment 29m is smaller than upstream nozzle body segment 26m to match the outer diameter of nozzle 20m at its downstream portion. Another embodiment, nozzle 20n, is shown in Figure 18. Nozzle 20n includes a manifold plug 40n, an upstream nozzle body segment 26n, an intermediate nozzle body segment 27n, a downstream nozzle body segment and a tip 38n that form a continuous melt channel 31 n. Tip 38n is coupled to downstream nozzle body segment 29n by a tip retainer 41 n. Conductive washers 115n and conductive sleeves 106n are also provided to improve heat conduction between the nozzle body segments. Nozzle 20n is similar to nozzle 20m described above in that intermediate nozzle body segment 27n includes an intermediate melt channel 68m that transitions from a first diameter D1 to a second smaller diameter D2. However, the outer diameter of nozzle body segment 27n does not change along its length resulting in the outer diameter of nozzle 20n not varying along its length. Such a configuration allows for the parts to be standardized. For example, upstream nozzle body segment 26n and downstream nozzle body segment 29n are identical heated nozzle body segments. Similarly, all conductive washers 115n are a standard size and conductive sleeves 106n are a standard size.

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. An injection molding apparatus (10) comprising:
a manifold (12)
an injection nozzle (20) having a nozzle body (23) forming a melt channel **characterized in that** said nozzle body (23) is multi-segmented (26,27,29), at least one of said nozzle body segments (27) is substantially heated passively through contact with at least one adjacent nozzle body segment (26, 29) that is heated actively, said at least one actively heated nozzle body segment (26, 29) has a heater in contact with it and said passively heated nozzle body segment (27) does not have a heater in contact with it.

2. An injection molding apparatus (10) as claimed in claim 1, wherein the nozzle body (23) includes a first nozzle body segment (26) forming a first melt channel segment (67), a second nozzle body segment (27) forming a second melt channel segment (68), and a third nozzle body segment (29) forming a third melt channel segment (69), said second nozzle body segment (27) is disposed between said first nozzle body segment (26) and said third nozzle body segment (29) such that said first melt channel (67), said second melt channel (68) and said third melt channel (69) collectively define a nozzle melt channel (31),

3. An injection molding apparatus (10) as claimed in claim 2 wherein said first and third nozzle body segments (26, 29) are heated actively and said second nozzle body segment (27) is configured to be heated substantially passively by said first and said third nozzle body segments (26, 29).

4. The injection molding apparatus as claimed in claim 3, wherein the second nozzle body segment (27) is fixedly connected to and fixed relative to the third nozzle body segment (29).

5. The injection molding apparatus as claimed in one of claims 1 to 4, further comprising additional means for conducting heat (106) from said first and third nozzle body segments (26b, 29b) along the length of said second nozzle body segment (27b).

6. The injection molding apparatus as claimed in claim 5, wherein said means for conducting comprises a thermally conductive layer (116) covering at least a portion of said second nozzle body segment (27b).

7. The injection molding apparatus as claimed in claim 6, wherein said thermally conductive layer (116) comprises a coating covering at least a portion of said intermediate nozzle body segment (27b).

8. The injection molding apparatus as claimed in claim 5, wherein said means for conducting is a sleeve (106).

9. The injection molding apparatus as claimed in one of claims 2 to 8, further comprising:
a first thermocouple (76) coupled to said first nozzle body segment (26a); and
a second thermocouple (76) coupled to said third nozzle body segment (29a).

10. The injection molding apparatus as claimed in claim 9, further comprising:
a third thermocouple (76) coupled to said second nozzle body segment (27a).

11. The injection molding apparatus as claimed in one of claims 5 to 10, further comprising an insulating coating layer covering at least partially said means for conducting (106).

12. The injection molding apparatus as claimed in claim 11, wherein said coating layer is comprised of a non-metallic material.

13. The injection molding apparatus as claimed in one of claims 5, 9 to 12, wherein said means for conducting comprises a plurality of copper rods (120) disposed longitudinally along through at least a portion of said second nozzle body segment (27f).

14. The injection molding apparatus as claimed in one of claims 1 to 13, wherein said passively heated nozzle body segment (27) is removably connected to at least one of said actively heated nozzle body segments (26, 29) and said third nozzle body segment (29).

15. The injection molding apparatus as claimed in one of claims 1 to 14, wherein said passively heated nozzle body segment (27) is made of a thermally conductive material having a higher thermal conductivity than 22 W/mK.

16. An injection molding apparatus (1000) according to one of claims 2 to 15 further comprising:
a heater sleeve (1033) disposed around an exterior surface of said nozzle (1020), said heater sleeve being in contact with said first nozzle body segment (1026) and said third nozzle body segment (1029) and having a cut-out (1035) formed therein along substantially the length of said second nozzle body segment (1027); and
a nozzle heater in contact with said heater sleeve (1033).

17. The injection molding apparatus as claimed in one of claims 1 to 16, further comprising:
a valve pin (61) disposed in said nozzle melt channel (31); and
an actuator (80) disposed in driving engagement with said valve pin (61).

18. The injection molding apparatus as claimed in claim 17, further comprising:
a first valve pin guide (82) disposed between said first nozzle body segment (26) and said second nozzle body segment (27); and
a second valve pin guide (86) disposed downstream of said third nozzle body segment (29).

19. The injection molding apparatus as claimed in claim 18, further comprising:
a third valve pin guide (84) disposed between said second nozzle body segment (27) and said third nozzle body segment (29).

20. The injection molding apparatus as claimed in one of claims 2 to 19, further comprising:
a first mold plate (134) disposed about said first nozzle body segment (26); and
a second mold plate (234) disposed about said second nozzle body segment (27).

21. The injection molding apparatus as claimed in claim 20, further comprising:
a third mold plate (334) disposed downstream of said third nozzle body segment (29), wherein said second mold plate (234) and said third mold plate (334) define a mold cavity (30).

22. The injection molding apparatus as claimed in claim 20 or 21, wherein said first mold plate (134) and said second mold plate (234) are releasably connected (35) to each other.

23. The injection molding apparatus as claimed in claim 21 or 22, wherein said second mold plate (234) and said third mold plate (334) are releasably connected (35) to each other.

24. The injection molding apparatus (10) as claimed in one of claims 1 to 23 and having a plurality of mold gates (58), said apparatus further comprising:
a plurality of nozzles (20, 24) disposed between said manifold (12) and said mold gates (58), wherein at least two of said nozzles (20, 24) are of different lengths.

25. The injection molding apparatus as claimed in claim 24, wherein said second nozzle body segments (27) of said at least two nozzles (20) are of different length and said first and third nozzle body segments (26, 29) of said at least two nozzles (20) are of same length respectively.

26. The injection molding apparatus (900) as claimed in one of claims 1 to 25 and having a plurality of mold gates (940, 941, 942, 943) and a plurality of mold cavities (935, 936, 937.

27. The injection molding apparatus as claimed in one of claims 9 to 26, further comprising:
a controller, linked to said first and second thermocouples (76), for controlling heat supplied to said first and third nozzle body segments (26a, 29a).

28. The injection molding apparatus as claimed in one of claims 2 to 15 and 17 to 27, wherein said first nozzle body segment (26) is in contact with a first heater and said third nozzle body segment (29) is in contact with a second heater.

29. The injection molding apparatus as claimed in one of claims 1 to 15 and 17 to 28, wherein said at least one heater is at least partially embedded in said nozzle body (23).

30. The injection molding apparatus as claimed in one of claims 1 to 29, further comprising:
a first retaining sleeve covering at least a portion of said first nozzle body segment; and
a second retaining sleeve covering at least a portion of said third nozzle body segment.

31. The injection molding apparatus as claimed in claim 30, wherein said first retaining sleeve and said second retaining sleeve are in abutment with said conductive layer.

32. The injection molding apparatus as claimed in claim 30 or 31, wherein said first retaining sleeve and said second retaining sleeve are each connected to said conductive layer by a shoulder engagement.

33. The injection molding apparatus as claimed in one of claims 1 to 32, wherein said first nozzle body segment and said second nozzle body segment are configured to be interchangeable.

34. The injection molding apparatus as claimed in one of claims 1 to 33, wherein said nozzle further includes a fourth nozzle body segment having a fourth melt channel and a fifth nozzle body segment having a fifth melt channel, said fourth nozzle body segment disposed between said third nozzle body segment and said fifth nozzle body segment such that said first, second, third, fourth and fifth melt channels collectively define a nozzle melt channel in fluid communication with said manifold channel.

35. The injection molding apparatus as claimed in one of claims 1 to 34, further comprising a conductive washer interposed between said first nozzle body segment and said second nozzle body segment.

36. The injection molding apparatus as claimed in one of claims 1 to 35, further comprising a conductive washer interposed between said second nozzle body segment and said third nozzle body segment.

37. The injection molding apparatus as claimed in one of claims 1 to 36, wherein said second melt channel has a diameter that varies along the length of said second nozzle body segment.

38. A nozzle (20) for use in an injection molding apparatus (10) as claimed in one of claims 1 to 37, said nozzle (20) comprising:
a segmented nozzle body (23) forming a melt channel and including at least one nozzle body segment (27) that is substantially heated passively through contact with at least one adjacent nozzle body segment (26, 29) that is heated actively, wherein said at least one actively heated nozzle body segment (26, 29) has a heater in contact with it and said passively heated nozzle body segment (27) does not have a heater in contact with it.

39. A nozzle (20) as claimed in claim 38, wherein
a first nozzle body segment (26) forms a first melt channel segment (67),
a second nozzle body segment (27) forms a second melt channel segment (68),
a third nozzle body segment (29) forms a third melt channel segment (69), said second nozzle body segment (27) is disposed between said first nozzle body segment (26) and said third nozzle body segment (29) such that said first, second and third melt channel segments (67, 68, 69) collectively define a nozzle melt channel (31); and
wherein said first and third nozzle body segments (27, 29) are actively heated and said second nozzle body segment (27) is configured to be heated substantially passively by said first and third nozzle body segments (26, 29).

40. A nozzle as claimed in claim 39, further comprising:
a nozzle tip connected to the third body nozzle segment (29).
